# EUROPÄISCHE PATENTSCHRIFT

(11) **EP 4 012 109 B1**
(45) Veröffentlichungstag und Bekanntmachung des Hinweises auf die Patenterteilung: **07.06.2023**
(21) Anmeldenummer: 20212704.9
(22) Anmeldetag: 09.12.2020
(51) Int. Cl.: E02F 9/20, B60L 9/00, E02F 3/30, E02D 17/13, E02F 9/08

(54) **BAUARBEITSMASCHINE**
CONSTRUCTION MACHINE
MACHINE DE CONSTRUCTION

(43) Veröffentlichungstag der Anmeldung: 15.06.2022
(73) Patentinhaber: BAUER Maschinen GmbH, 86529 Schrobenhausen (DE)
(72) Erfinder: Miller, Florian, 85116 Egweil (DE); Skirlo, Gernot, 86633 Neuburg (DE)
(74) Vertreter: Wunderlich & Heim Patentanwälte Partnerschaftsgesellschaft mbB

(56) Entgegenhaltungen:
- JP-A- 2014 084 569
- JP-A- 2017 014 687
- JP-B2- 6 752 125
- US-A1- 2006 182 608

## Beschreibung

Die Erfindung betrifft eine Bauarbeitsmaschine mit einem Oberwagen, einem Unterwagen, welcher ein Fahrwerk aufweist und auf dem der Oberwagen drehbar um eine Hochachse gelagert ist, und einem Zuführarm für mindestens eine Energieleitung, mit welcher Energie von außen der Bauarbeitsmaschine zuleitbar ist, wobei der Zuführarm an dem Oberwagen verstellbar gelagert ist, gemäß dem Oberbegriff des Anspruchs 1.

Eine gattungsgemäße Bauarbeitsmaschine geht aus der WO 2013/162448 A1 hervor.

Insbesondere aus Gründen des Umweltschutzes und zur Verringerung der Lärmabstrahlung werden Bauarbeitsmaschinen teilweise oder sogar vollständig elektrisch angetrieben. Aufgrund des hohen Energiebedarfs ist hierfür eine mobile Bauarbeitsmaschine über eine Energieleitung mit Energie, insbesondere elektrischem Strom, zu versorgen. Bei Bauarbeitsmaschinen mit einem Unterwagen und einem darauf drehbar gelagerten Oberwagen besteht das Problem einer sicheren Energiezuleitung. Bei einer Zuführung der Energieleitung an den Unterwagen besteht eine erhöhte Gefahr der Beschädigung durch das Fahrwerk, da die Energieleitung relativ nah am Boden geführt ist.

Bei der Zuführung der Energie an einen drehbaren Oberwagen ergibt sich die Gefahr, dass bei einer Veränderung der Drehposition es zu einer unerwünschten Überstreckung der Energieleitung mit einer Beschädigung oder gar einem Abreißen der Energieleitung kommen kann. Um dieser Gefahr entgegenzuwirken, ist es beispielsweise aus der genannten WO 2013/162448 A1 bekannt, an der Oberseite des Oberwagens einen verschwenkbar gelagerten Zuführarm vorzusehen.

Aus der JP 6 752 125 B2 geht eine elektrische Bauarbeitsmaschine hervor, bei welcher auch an der Oberseite des Oberwagens eine Kabelzuführung mit einem verschwenkbaren Stützarm angeordnet ist.

Der Erfindung liegt die **Aufgabe** zugrunde, eine Bauarbeitsmaschine anzugeben, bei welcher eine Leitungszuführung an die Bauarbeitsmaschine besonders sicher ist.

Die Aufgabe wird durch eine Bauarbeitsmaschine mit den Merkmalen des Anspruchs 1 gelöst. Bevorzugte Ausführungsformen der Erfindung sind in den abhängigen Ansprüchen angegeben.

Die erfindungsgemäße Bauarbeitsmaschine ist dadurch gekennzeichnet, dass mindestens eine Antriebseinrichtung zum aktiven Verstellen des Zuführarms relativ zu dem Oberwagen vorgesehen ist.

Eine Grundidee der Erfindung besteht darin, mindestens eine Antriebseinrichtung, also einen Motor oder motorischen Antrieb, mit oder ohne einer Getriebeanordnung, vorzusehen, mit welchem der Zuführarm relativ zum Oberwagen aktiv verstellt werden kann. Eine Getriebeanordnung kann Zahnräder, Hebel oder Seile umfassen. Durch ein aktives Verstellen des Zuführarmes, insbesondere bei einem Verdrehen des Oberwagens, können gezielt eine Belastung an der Energieleitung und insbesondere Zugspannungen an dieser vermieden oder wirksam reduziert werden. Die Kraft für ein Verschwenken des Zuführarms muss somit nicht durch die Bewegung des Oberwagens und damit durch eine mechanische Spannung zwischen Zuführarm und Energieleitung aufgebracht werden. Vielmehr kann der Zuführarm gezielt und aktiv verstellt werden. Dies kann die Belastung der Energieleitung durch mechanische Kräfte reduzieren. Hierdurch vermindert sich auch die Gefahr des Abreißens der Energieleitung im Betrieb, was zu einer Arbeitsunterbrechung führen kann. Insbesondere bei der Zuführung von elektrischem Strom ergibt sich so eine Erhöhung des Arbeitsschutzes. Die Energieleitung muss nicht oder nicht allein für elektrischen Strom vorgesehen sein. Sie kann auch zum Leiten von Hydraulikfluid, Druckluft etc. sowie von Daten ausgebildet sein.

Eine bevorzugte Ausführungsform der Erfindung besteht darin, dass eine Steuereinrichtung vorgesehen ist, durch welche eine Position des Oberwagens relativ zum Unterwagen erfassbar ist, und dass die Steuereinrichtung zum Ansteuern der mindestens einen Antriebseinrichtung abhängig von einer erfassten Änderung der Position des Oberwagens ausgebildet ist. Die Position des Oberwagens relativ zum Unterwagen kann dabei über einen entsprechenden Sensor, insbesondere einen Drehwinkelgeber, bestimmt werden. Wird ausgehend von einer Anfangsposition, bei welcher vorzugsweise Unterwagen und Oberwagen in einer Grundanordnung gleich ausgerichtet sind, der Oberwagen in einem Baubetrieb gegenüber dem Unterwagen verschwenkt, so kann der Schwenkwinkel erfasst und der Steuereinrichtung zugeleitet werden. Die Steuereinrichtung kann abhängig von der erfassten Winkeländerung mindestens eine Antriebseinrichtung ansteuern, so dass der Zuführarm mit der Energieleitung in einer gewünschten Weise relativ zum Oberwagen verstellt wird.

Nach einer Weiterentwicklung der Erfindung ist es bevorzugt, dass die Steuereinrichtung ausgebildet ist, die mindestens eine Antriebseinrichtung derart anzusteuern, dass der Zuführarm relativ zur von außen zugeführten Energieleitung stillsteht oder weitgehend stillsteht. Hierdurch kann eine Übertragung von mechanischen Kräften durch eine Bewegung des Oberwagens auf die Energieleitung in großem Maße oder nahezu vollständig reduziert werden. Es können eine oder mehrere Antriebseinrichtungen, welche zum Drehen, Schwenken, Höhenverschieben oder Längsverschieben von Komponenten des Zuführarms ausgebildet sind, vorgesehen sein.

Besonders effizient ist es nach einer Weiterbildung der Erfindung, dass der Zuführarm an einer Oberseite des Oberwagens schwenkbar um eine Schwenkachse gelagert ist. Der Zuführarm kann dabei als ein Kragarm ausgebildet sein, welcher sich radial von der Schwenkachse über die Außenmaße des Oberwagens oder der Bauarbeitsmaschine hinaus erstreckt. Diese Anordnung erlaubt ein besonders gutes Zu- und Nachführen einer Energieleitung.

Besonders vorteilhaft ist es dabei nach einer Weiterbildung der Erfindung, dass die Schwenkachse des Zuführarms parallel zur Hochachse des Oberwagens gerichtet und/oder im Bereich der Hochachse angeordnet ist. Unter Hochachse ist eine im Wesentlichen vertikal gerichtete Achse zu verstehen, welche senkrecht auf eine horizontale Grundebene ausgerichtet ist. Je näher die Schwenkachse des Zuführarms im Bereich der Hochachse des Oberwagens liegt desto besser kann eine Drehbewegung des Oberwagens in Bezug auf die Energieleitung kompensiert werden. Die Schwenkachse kann durch einen vertikal gerichteten Schaft gebildet sein, an dem zum Bilden des Zuführarms ein quer gerichteter Kragarm angeordnet ist. Der Schaft kann eine drehbar gelagerte Welle sein, welche selbst ein fester Bestandteil des Zuführarms ist.

Der Schaft kann alternativ am Oberwagen fest angebracht sein, wobei der Zuführarm an dem Schaft drehbar gelagert ist.

Eine besonders vorteilhafte Ausführungsform der Erfindung besteht darin, dass die Schwenkachse des Zuführarms koaxial zur Hochachse des Oberwagens angeordnet ist. Die Hochachse und die Schwenkachse bilden somit eine gemeinsame Drehachse. Dies vermeidet in besonders hohem Maße das Auftreten mechanischer Spannungen in der Energieleitung bei einem Verschwenken des Oberwagens.

Weiterhin ist es nach einer Ausführungsvariante der Erfindung bevorzugt, dass der Zuführarm radial zur Hochachse des Oberwagens gerichtet und mit einer Länge ausgebildet ist, wobei der Zuführarm in jeder Schwenkachse seitlich über den Oberwagen vorsteht. Insbesondere kann der Zuführarm so ausgebildet sein, dass die Energieleitung nicht schleifend an dem Oberwagen zur Anlage kommt, so dass Reibungsverschleiß an der Außenseite der Energieleitung vermieden wird.

Besonders vorteilhaft ist es nach einer Weiterbildung der Erfindung, dass die Länge des Zuführarms verstellbar ist, insbesondere abhängig von einer Schwenkposition des Zuführarms relativ zum Oberwagen. Der Zuführarm kann dabei insbesondere in radialer Richtung eine variable Länge aufweisen und über eine entsprechende Antriebseinrichtung in Längsrichtung verstellt werden. Insbesondere kann der Zuführarm in radialer Richtung teleskopierbar sein, wobei abhängig von Schwenkwinkel und dem üblicherweise etwa rechteckigen Oberwagen eine ausreichende Länge des Zuführarms beim Verschwenken sichergestellt ist. Dabei kann gewährleistet werden, dass die Energieleitung auch bei einem Verlauf über die Eckbereiche des Oberwagens nicht am Oberwagen schleift und auch bei anderen Drehstellungen kein zu weites radiales Auskragen des Zuführarms über den Oberwagen hinaus gegeben ist. Die Länge des Zuführarms kann von der Steuereinrichtung abhängig vom Schwenkwinkel des Oberwagens und der Position des Zuführarms eingestellt werden.

Eine besonders gute Verstellung kann nach einer weiteren Ausgestaltungsvariante der Erfindung dadurch erzielt werden, dass der Zuführarm mindestens zwei Armglieder umfasst, welche zueinander verstellbar sind. Es können auch drei oder mehr Armglieder vorgesehen sein. Die Armglieder können dabei linear zueinander verschiebbar und/oder über entsprechende Schwenkgelenke verschwenkbar zueinander gelagert sein. Vorzugsweise sind die Armglieder zueinander über eine oder mehrere Antriebseinrichtungen gezielt verstellbar, wobei die Antriebseinrichtungen jeweils über die Steuereinrichtung ansteuerbar sind.

Besonders zweckmäßig ist es nach einer weiteren möglichen Ausgestaltungsform der Erfindung, dass die mindestens zwei Armglieder über mindestens ein Gelenk verschwenkbar miteinander verbunden sind. Die Achsen der Schwenkgelenke können dabei parallel zur Hochachse oder auch dazu quergerichtet sein. Es kann so eine gewünschte zwei- oder dreidimensionale Verstellung des Zuführarms im Raum gegenüber dem Oberwagen eingestellt werden.

Nach einer weiteren Ausführung der Erfindung ist es besonders vorteilhaft, dass der Zuführarm in Achsrichtung der Schwenkachse höhenverstellbar ist. So kann beispielsweise der Zuführarm zu Transportzwecken eingezogen und vorzugsweise in eine entsprechende Ausnehmung am Oberwagen in eine Rückzugsposition rückgezogen sein. Dabei kann auch ein Einklappen oder Rückziehen in einer radialen Richtung erfolgen. Im Betrieb kann dann der Zuführarm aus der Rückzugsposition in eine Betriebsposition ausgefahren werden, in welcher zumindest der radiale Abschnitt des Zuführarmes beabstandet zu dem Oberwagen angeordnet ist. Der Schaft der Schwenkachse kann dabei insbesondere teleskopierbar und über eine Antriebseinrichtung verstellbar sein.

Vorzugsweise ist die Steuereinrichtung ausgebildet, mit oder ohne Sensoren einen Aufbauzustand der Baumaschine zu erfassen, insbesondere ob am Oberwagen Zusatzkomponenten, wie eine Betonpumpe oder Gegengewichte, angebracht sind. Abhängig von den erfassten Zuständen kann die Steuereinrichtung eine entsprechende Größe des Zuführarms einstellen.

Eine weitere bevorzugte Ausführungsform der Erfindung besteht darin, dass eine Warneinrichtung vorgesehen ist, durch welche eine Position des Zuführarms relativ zum Oberwagen und/oder zu weiteren Komponenten der Bauarbeitsmaschine und/oder zu Hindernissen in der Umgebung erfassbar und eine mögliche Kollision mit dem Zuführarm feststellbar ist. Durch die Warneinrichtung kann eine Anzeige an einen Maschinenbediener, insbesondere ein Warnsignal, in akustischer, optischer und/oder sonstiger Weise erfolgen. Zusätzlich oder alternativ kann ein Schwenkbereich des Oberwagens eingegrenzt oder eine Bewegung des Oberwagens durch die Warneinrichtung gestoppt werden. Hierzu ist die Warneinrichtung mit der Steuereinrichtung zum Steuern eines Antriebes des Oberwagens verbunden.

Eine bevorzugte Weiterbildung dieser Ausführungsform ist dabei dadurch gegeben, dass ein oder mehrere Sensoreinrichtungen, insbesondere eine Kameraeinheit, zur Erfassung von Hindernissen angeordnet sind. Die Sensoreinrichtungen können dabei grundsätzlich beliebig in jeder geeigneten Weise ausgebildet sein. Insbesondere können auch Ultraschallsensoren, Radareinheiten oder sonstige berührungslose Sensoren zur Erfassung von Komponenten oder Hindernissen in einem Bewegungsbereich des Zuführarms eingesetzt werden. Grundsätzlich können auch kontaktabhängige Sensoreinrichtungen vorgesehen sein, welche Kontaktelemente aufweisen. Diese Kontaktelemente können bei Berührung mit einem Hindernis ein entsprechendes Kontaktsignal auslösen.

Weiter ist es nach einer Ausführungsvariante der Erfindung bevorzugt, dass entlang des Zuführarms die Energieleitung mit einer variablen Länge geführt ist. Die Energieleitung ist dabei so entlang des Zuführarms geführt, dass Längenänderungen des Zuführarms sowie Verstellungen von Gliedern des Zuführarms problemlos erfolgen können.

Besonders bevorzugt ist es dabei, dass eine Leitungstrommel, ein Kabelschlepp und/oder eine Leitungsspanneinrichtung für die Energieleitung an dem Oberwagen angeordnet ist. Von einer Leitungstrommel am Oberwagen kann bei Bedarf eine zusätzliche Energieleitung abgewickelt werden. Die Leitungstrommel kann dabei insgesamt auch so ausgebildet sein, dass eine Energieleitung von bis zu 100 Meter Länge oder mehr an der Bauarbeitsmaschine selbst vorgehalten ist, um so jederzeit eine Leitungsverbindung zu einer entsprechenden lokalen Energiequelle herzustellen. Ein Kabelschlepp stellt eine bogenförmige Anordnung mit ein oder mehreren Bögen für die Energieleitung entlang des Zuführarms dar, so dass entsprechend Längenänderungen des Zuführarms kompensiert werden können.

Alternativ oder zusätzlich kann eine Leitungsspanneinrichtung vorgesehen sein, mit welcher etwa eine wendelförmig angeordnete Energieleitung flexibel ausgefahren und rückgespannt werden kann, um so Längenänderungen am Zuführarm auszugleichen. Vorzugsweise ist im Bereich des Zuführarms eine Steckeinrichtung vorgesehen, mit welcher eine externe Energieleitung mit einer internen Energieleitung an dem Oberwagen lösbar verbunden werden kann. An den entsprechenden Enden der gegenüberliegenden Energieleitungen sind passende Stecker angeordnet. Die Stecker können insbesondere übliche Steckverbindungen für Drehstrom oder Starkstrom, bevorzugt mit Verriegelung, sein.

Eine weitere bevorzugte Ausgestaltung der Erfindung besteht darin, dass im Bereich des Zuführarms eine Nottrenneinrichtung vorgesehen ist, mit welcher eine Energieversorgung über die Energieleitung durch den Maschinenbediener oder automatisch in bestimmten Notfallsituationen getrennt werden kann. Die Nottrenneinrichtung kann insbesondere ein Hubelement aufweisen, mit welchem die Stecker einer vorgesehenen Steckverbindung auseinandergezogen werden können. Hierdurch können eine zuverlässige mechanische Trennung und Unterbrechung der Energieleitung bewirkt werden.

Die Nottrenneinrichtung kann insbesondere mit der Maschinensteuerung und/oder der Warneinrichtung an der Bauarbeitsmaschine verbunden sein.

Nachfolgend wird die Erfindung anhand eines bevorzugten Ausführungsbeispiels weiter beschrieben, das schematisch in den beigefügten Zeichnungen dargestellt ist. In den Zeichnungen zeigen:

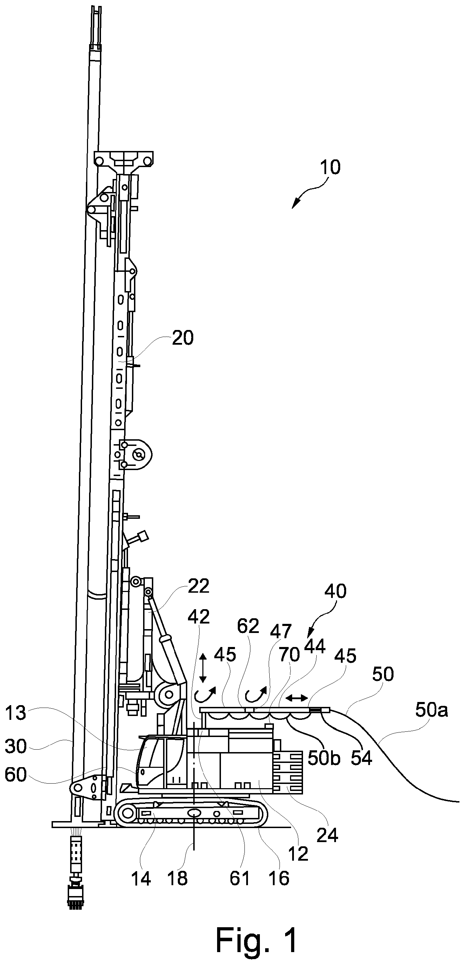

Fig. 1 eine schematische Seitenansicht einer erfindungsgemäßen Bauarbeitsmaschine, insbesondere eine Tiefbaumaschine, und

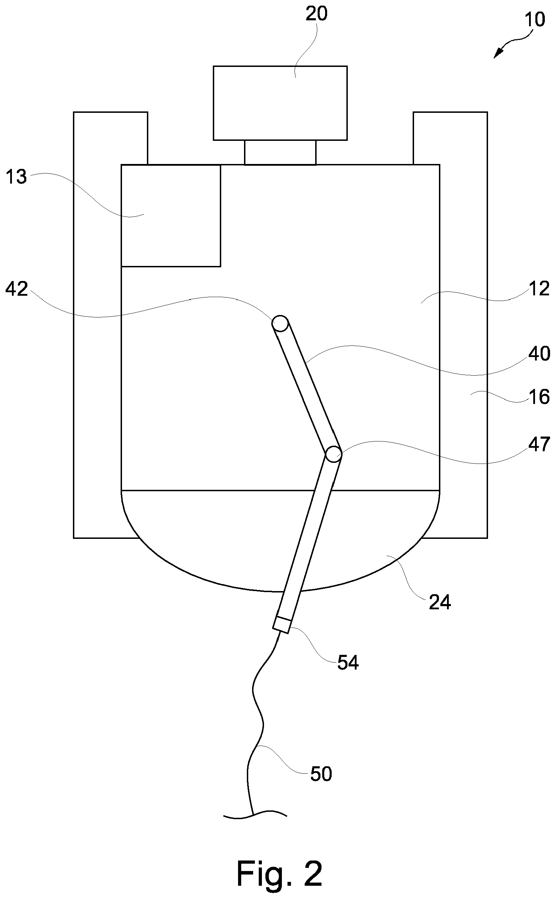

Fig. 2 eine Draufsicht auf die Bauarbeitsmaschine von Fig. 1.

Eine erfindungsgemäße Bauarbeitsmaschine 10 weist gemäß den Figuren einen Oberwagen 12 und einen Unterwagen 14 auf, welcher ein Fahrwerk 16, insbesondere ein Raupenfahrwerk, umfasst. Der Oberwagen 12 ist um eine etwa mittige, vertikal gerichtete Hochachse 18 drehbar auf dem Unterwagen 14 gelagert und angetrieben. An einer Vorderseite des Oberwagens 12 ist über eine Verstellmechanik 22 ein im Wesentlichen vertikal gerichteter Mast 20 verstellbar angebracht, entlang dem ein Bodenbearbeitungswerkzeug 30 verstellbar gelagert ist. Das Bodenbearbeitungswerkzeug 30 kann beispielsweise ein Bohrwerkzeug oder, wie dargestellt, eine Fräsvorrichtung zum Erstellen eines Lochs im Boden sein.

Weiterhin ist an dem Oberwagen 12 eine Kabine 13 für einen Maschinenbediener angeordnet. Vorzugsweise ist in der Kabine 13 eine Steuereinrichtung 60 angeordnet, welche vorzugsweise insgesamt zur Steuerung der Bauarbeitsmaschine 10 ausgebildet ist.

Abhängig von der Betriebsweise der Bauarbeitsmaschine 10 können an dem Oberwagen 12 an einer Rückseite, welche der Vorderseite mit dem Mast 20 gegenüberliegt, Gegengewichte 24 lösbar angebracht sein. Die Anzahl und Größe der Gegengewichte 24 kann variieren und vorzugsweise von der Steuereinrichtung 60 über nicht-dargestellte Sensoren erfasst werden. Beispielsweise können die Gegengewichte mit Transpondern versehen sein, welche sensorisch zur Übermittlung von Informationen zur Dimensionierung auslesbar sind.

Zur Energiezuführung an die Bauarbeitsmaschine 10 von außen, insbesondere zur Zuführung von elektrischer Energie, ist eine Energieleitung 50 vorgesehen. Die Energieleitung 50 weist eine externe erste Energieleitung 50a auf, welche über eine lösbare Steckverbindung 54 mit einer geräteinternen zweiten Energieleitung 50b verbunden ist.

Gemäß der Erfindung ist die geräteinterne zweite Energieleitung 50b entlang eines Zuführarms 40 geführt und gehaltert, welcher an einer Oberseite des Oberwagens 12 angeordnet ist.

Der Zuführarm 40 weist dabei eine Schwenkachse 42 mit einem Schaft auf, welcher parallel zur Hochachse 18 des Oberwagens 12 gerichtet ist. In dem dargestellten Ausführungsbeispiel ist die Schwenkachse 42 mit einem gewissen radialen Abstand zu der Hochachse 18 angeordnet, kann aber auch koaxial zu dieser verlaufen. An einem oberen Ende des Schwenkachse 42, welches beispielsweise zwischen 5 bis 50 cm oberhalb der Oberseite des Oberwagens 12 liegen kann, ist ein etwa radial oder horizontal gerichteter Kragarm 44 des Zuführarms 40 angebracht. In dem dargestellten Ausführungsbeispiel ist der Kragarm 44 durch ein erstes Armglied 45 und ein zweites Armglied 46 gebildet, welche über ein Schwenkgelenk 47 miteinander schwenkbar verbunden sind. Die Gelenkachse des Schwenkgelenkes 47 ist vorzugsweise parallel zur Schwenkachse 42 und zur Hochachse 18 gerichtet. Gleichzeitig können das erste Armglied 45 und/oder das zweite Armglied 46 teleskopierbar ausgebildet sein, so dass eine zusätzliche Längenänderung des horizontal gerichteten Kragarms 44 einstellbar ist.

Der Kragarm 44 ist dabei vorzugsweise durch die Steuereinrichtung 60 so eingestellt, dass dieser zuverlässig über einen Außenumfang des Oberwagens 12 einschließlich der Gegengewichte 24 vorzugsweise nach hinten hinausragt, um einen schleifenden Kontakt der Energieleitung 50 mit dem Oberwagen 12 oder den Gegengewichten 24 zu vermeiden.

Zur aktiven, motorischen Verstellbarkeit des Zuführarms 40 ist an der Schwenkachse 42 eine erste Antriebseinrichtung 61 vorgesehen, mit der die Schwenkachse 42 verschwenkbar und/oder in axialer Richtung höhenverstellbar ist. In der Zeichnung ist dabei der Zuführarm 40 in seiner nach oben ausgefahrenen Betriebsposition dargestellt. Aus dieser Betriebsposition kann der Zuführarm 40 auch nach unten in eine Rückzugsposition, etwa zu Transportzwecken, eingefahren oder eingeklappt werden.

Das erste Armglied 45, welches in der Schwenkachse 42 angeordnet ist, kann über eine zweite Antriebseinrichtung 62 am Gelenk 47 gegenüber dem zweiten Armglied 46 ebenfalls aktiv verstellt werden.

Um insbesondere eine ausreichende Längenänderung des Zuführarms 40 in einer horizontalen Richtung zu gewährleisten, ist die zweite gerätegebundene Energieleitung 50b entlang der Unterseite des Zuführarms 40 mit mehreren Bögen entlang einer nichtdargestellten Längsführung gelagert, so dass hierdurch eine Längenkompensation bei einem Ausfahren oder Einfahren des Zuführarms 40 erfolgen kann.

Die jeweiligen Bewegungsmöglichkeiten des Zuführarms 40 bei dem dargestellten Ausführungsbeispiel sind durch schematische Pfeile angezeigt. Am freien Ende des Zuführarms 40 kann ein beweglich oder verstellbar gelagerter Stecker für die Energieleitung 50 vorgesehen sein, so dass diese bei Verstellung des Zuführarms 40 möglichst mit gleicher Position in den Zuführarm 40 mündet.

Über die Steuereinrichtung 60 kann der Maschinenbediener aktiv den Zuführarm 40 in einer gewünschten Weise verstellen. Vorzugsweise umfasst die Steuereinrichtung 60 eine Automatik, mit welcher der Zuführarm 40 relativ zum Oberwagen 12 in einem Baubetrieb abhängig von einer Bewegung des Oberwagens 12 verstellt wird. Insbesondere kann dabei die Zuordnung der ersten Energieleitung 50a und der Energieleitung 50b relativ zueinander gleich gehalten werden, so dass eine Belastung der gesamten Energieleitung 50 durch mechanische Spannungen sowie eine schleifende Bewegung der Energieleitung 50 am Boden weitgehend reduziert oder sogar vermieden werden kann. Auf diese Weise kann durch die erfindungsgemäße Anordnung ein besonders sicherer Betrieb der Bauarbeitsmaschine 10 bei Zuführung von Energie über eine externe Energieleitung 50 erreicht werden. Auch kann die Automatik eine Schwenkbegrenzung umfassen, um Kollisionen zu vermeiden.

## Patentansprüche

1. Bauarbeitsmaschine mit
- einem Oberwagen (12),
- einem Unterwagen (14), welcher ein Fahrwerk (16) aufweist und auf welchem der Oberwagen (12) drehbar um eine Hochachse (18) gelagert ist, und
- einem Zuführarm (40) für mindestens eine Energieleitung (50), mit welcher Energie von außen der Bauarbeitsmaschine (10) zuleitbar ist,
- wobei der Zuführarm (40) an dem Oberwagen (12) verstellbar gelagert ist,
**dadurch gekennzeichnet,**
**dass** mindestens eine Antriebseinrichtung (61, 62) zum aktiven Verstellen des Zuführarms (40) relativ zu dem Oberwagen (12) vorgesehen ist.

2. Bauarbeitsmaschine nach Anspruch 1,
**dadurch gekennzeichnet,**
**dass** eine Steuereinrichtung (60) vorgesehen ist, durch welche eine Position des Oberwagens (12) relativ zum Unterwagen (14) erfassbar ist, und
**dass** die Steuereinrichtung (60) zum Ansteuern der mindestens einen Antriebseinrichtung (61, 62) abhängig von einer erfassten Änderung der Position des Oberwagens (12) ausgebildet ist.

3. Bauarbeitsmaschine nach Anspruch 2,
**dadurch gekennzeichnet,**
**dass** die Steuereinrichtung (60) ausgebildet ist, die mindestens eine Antriebseinrichtung (61, 62) derart anzusteuern, dass der Zuführarm (40) relativ zur von außen zugeführten Energieleitung (50) stillsteht oder weitgehend stillsteht.

4. Bauarbeitsmaschine nach einem der Ansprüche 1 bis 3,
**dadurch gekennzeichnet,**
**dass** der Zuführarm (40) an einer Oberseite des Oberwagens (12) schwenkbar um eine Schwenkachse (42) gelagert ist.

5. Bauarbeitsmaschine nach Anspruch 4,
**dadurch gekennzeichnet,**
**dass** die Schwenkachse (42) des Zuführarms (40) parallel zur Hochachse (18) des Oberwagens (12) gerichtet und/oder im Bereich der Hochachse (18) angeordnet ist.

6. Bauarbeitsmaschine nach Anspruch 5,
**dadurch gekennzeichnet,**
**dass** die Schwenkachse (42) des Zuführarms (40) koaxial zur Hochachse (18) des Oberwagens (12) angeordnet ist.

7. Bauarbeitsmaschine nach einem der Ansprüche 1 bis 6,
**dadurch gekennzeichnet,**
**dass** der Zuführarm (40) radial zur Hochachse (18) des Oberwagens (12) gerichtet und mit einer Länge ausgebildet ist, wobei der Zuführarm (40) in jeder Schwenkposition seitlich über den Oberwagen (12) vorsteht.

8. Bauarbeitsmaschine nach einem der Ansprüche 1 bis 7,
**dadurch gekennzeichnet,**
**dass** eine Länge des Zuführarms (40) verstellbar ist, insbesondere abhängig von einer Schwenkposition des Zuführarms (40) relativ zum Oberwagen (12).

9. Bauarbeitsmaschine nach einem der Ansprüche 1 bis 8,
**dadurch gekennzeichnet,**
**dass** der Zuführarm (40) mindestens zwei Armglieder (45, 46) umfasst, welche zueinander verstellbar sind.

10. Bauarbeitsmaschine nach Anspruch 9,
**dadurch gekennzeichnet,**
**dass** die mindestens zwei Armglieder (45, 46) über mindestens ein Gelenk (47) verschwenkbar miteinander verbunden sind.

11. Bauarbeitsmaschine nach einem der Ansprüche 1 bis 10,
**dadurch gekennzeichnet,**
**dass** der Zuführarm (40) in Achsrichtung der Schwenkachse (42) höhenverstellbar ist.

12. Bauarbeitsmaschine nach einem der Ansprüche 1 bis 11,
**dadurch gekennzeichnet,**
**dass** eine Warneinrichtung vorgesehen ist, durch welche eine Position des Zuführarms (40) relativ zum Oberwagen (12) und/oder zu weiteren Komponenten der Bauarbeitsmaschine (10) und/oder zu Hindernissen in der Umgebung erfassbar und eine mögliche Kollision mit dem Zuführarm (40) feststellbar ist.

13. Bauarbeitsmaschine nach Anspruch 12,
**dadurch gekennzeichnet,**
**dass** ein oder mehrere Sensoreinrichtungen (70), insbesondere eine Kameraeinheit, zur Erfassung von Hindernissen, angeordnet sind.

14. Bauarbeitsmaschine nach einem der Ansprüche 1 bis 13,
**dadurch gekennzeichnet,**
**dass** entlang des Zuführarms (40) die Energieleitung (50) mit einer variablen Länge geführt ist.

15. Bauarbeitsmaschine nach einem der Ansprüche 1 bis 14,
**dadurch gekennzeichnet,**
**dass** eine Leitungstrommel, ein Kabelschlepp und/oder eine Leitungsspanneinrichtung für die Energieleitung (50) an dem Oberwagen (12) angeordnet ist.

## Claims

1. Construction machine having
- a superstructure (12),
- an undercarriage (14), which comprises a chassis (16) and on which the superstructure (12) is mounted rotatably about a vertical axis (18),
and
- a supply arm (40) for at least one energy line (50), with which energy can be supplied from outside of the construction machine (10),
- wherein the supply arm (40) is mounted adjustably on the superstructure (12),
**characterised in that**
at least one drive device (61, 62) is provided for actively adjusting the supply arm (40) relative to the superstructure (12).

2. Construction machine according to claim 1,
**characterised in that**
a control device (60) is provided, by means of which a position of the superstructure (12) relative to the undercarriage (14) can be detected, and
the control device (60) is designed to actuate the at least one drive device (61, 62) depending on a detected change in the position of the superstructure (12).

3. Construction machine according to claim 2,
**characterised in that**
the control device (60) is designed to actuate the at least one drive device (61, 62) such that the supply arm (40) is stationary or largely stationary relative to the energy cable (50) supplied from outside.

4. Construction machine according to any one of claims 1 to 3,
**characterised in that**
the supply arm (40) is mounted pivotably about a pivot axis (42) on an upper side of the superstructure (12).

5. Construction machine according to claim 4,
**characterised in that**
the pivot axis (42) of the supply arm (40) is oriented parallel to the vertical axis (18) of the superstructure (12) and/or is arranged in the region of the vertical axis (18).

6. Construction machine according to claim 5,
**characterised in that**
the pivot axis (42) of the supply arm (40) is arranged coaxially with the vertical axis (18) of the superstructure (12).

7. Construction machine according to any one of claims 1 to 6,
**characterised in that**
the supply arm (40) is oriented radially to the vertical axis (18) of the superstructure (12) and is designed with a length, wherein the supply arm (40) protrudes laterally beyond the superstructure (12) in any pivot position.

8. Construction machine according to any one of claims 1 to 7,
**characterised in that**
a length of the supply arm (40) is adjustable, in particular depending on a pivot position of the supply arm (40) relative to the superstructure (12).

9. Construction machine according to any one of claims 1 to 8,
**characterised in that**
the supply arm (40) comprises at least two arm members (45, 46), which are adjustable relative to one another.

10. Construction machine according to claim 9,
**characterised in that**
the at least two arm members (45, 46) are connected pivotably to one another via at least one joint (47).

11. Construction machine according to any one of claims 1 to 10,
**characterised in that**
the supply arm (40) is height-adjustable in the axial direction of the pivot axis (42).

12. Construction machine according to any one of claims 1 to 11,
**characterised in that**
a warning device is provided, by means of which a position of the supply arm (40) relative to the superstructure (12) and/or to further components of the construction machine (10) and/or to obstacles in the surroundings can be detected and a possible collision with the supply arm (40) can be identified.

13. Construction machine according to claim 12,
**characterised in that**
one or more sensor devices (70), in particular a camera unit, are arranged to detect obstacles.

14. Construction machine according to any one of claims 1 to 13,
**characterised in that**
the energy cable (50) is routed along the supply arm (40) with a variable length.

15. Construction machine according to any one of claims 1 to 14,
**characterised in that**
a cable reel, a cable drag chain and/or a cable-tensioning device for the energy cable (50) is arranged on the superstructure (12).

## Revendications

1. Machine de construction comportant :
- une superstructure (12),
- une infrastructure (14) qui présente un châssis roulant (16) et sur lequel la superstructure (12) est montée de manière rotative autour d'un axe vertical (18), et
- un bras d'alimentation (40) pour au moins une conduite d'énergie (50), avec laquelle de l'énergie peut être acheminée de l'extérieur de la machine de construction (10),
- dans laquelle le bras d'alimentation (40) est monté de manière réglable au niveau de la superstructure (12), **caractérisée en ce que**
au moins un dispositif d'entraînement (61, 62) est prévu pour le réglage actif du bras d'alimentation (40) par rapport à la superstructure (12).

2. Machine de construction selon la revendication 1,
**caractérisée en ce que**
un dispositif de commande (60) est prévu, par lequel une position de la superstructure (12) est détectable par rapport à l'infrastructure (14), et
**en ce que** le dispositif de commande (60) est réalisé pour la commande d'au moins un dispositif d'entraînement (61, 62) en fonction d'une modification détectée de la position de la superstructure (12).

3. Machine de construction selon la revendication 2,
**caractérisée en ce que**
le dispositif de commande (60) est réalisé afin de commander l'au moins un dispositif d'entraînement (61, 62) de telle manière que le bras d'alimentation (40) s'arrête ou s'arrête sensiblement par rapport à la conduite d'énergie (50) alimentée de l'extérieur.

4. Machine de construction selon l'une quelconque des revendications 1 à 3,
**caractérisée en ce que**
le bras d'alimentation (40) est monté de manière pivotante autour d'un axe de pivotement (42) au niveau d'un côté supérieur de la superstructure (12).

5. Machine de construction selon la revendication 4,
**caractérisée en ce que**
l'axe de pivotement (42) du bras d'alimentation (40) est dirigé parallèlement à l'axe vertical (18) de la superstructure (12) et/ou est agencé dans la zone de l'axe vertical (18).

6. Machine de construction selon la revendication 5,
**caractérisée en ce que**
l'axe de pivotement (42) du bras d'alimentation (40) est agencé coaxialement à l'axe vertical (18) de la superstructure (12).

7. Machine de construction selon l'une des revendications 1 à 6,
**caractérisée en ce que**
le bras d'alimentation (40) est dirigé radialement à l'axe vertical (18) de la superstructure (12) et est réalisé avec une longueur, dans laquelle le bras d'alimentation (40) dépasse dans chaque position de pivotement latéralement de la superstructure (12).

8. Machine de construction selon l'une des revendications 1 à 7,
**caractérisée en ce que**
une longueur du bras d'alimentation (40) est réglable, en particulier en fonction d'une position de pivotement du bras d'alimentation (40) par rapport à la superstructure (12).

9. Machine de construction selon l'une des revendications 1 à 8,
**caractérisée en ce que**
le bras d'alimentation (40) comporte au moins deux organes de bras (45 46) qui sont réglables l'un par rapport à l'autre.

10. Machine de construction selon la revendication 9,
**caractérisée en ce que**
les au moins deux organes de bras (45, 46) sont reliés entre eux de manière pivotante par le biais d'au moins une articulation (47).

11. Machine de construction selon l'une des revendications 1 à 10,
**caractérisée en ce que**
le bras d'alimentation (40) est réglable en hauteur dans le sens axial de l'axe de pivotement (42).

12. Machine de construction selon l'une des revendications 1 à 11,
**caractérisée en ce que**
un dispositif d'avertissement est prévu, par lequel une position du bras d'alimentation (40) par rapport à la superstructure (12) et/ou aux autres composants de la machine de construction (10) et/ou aux obstacles dans l'environnement peut être détectée et une collision possible avec le bras d'alimentation (40) peut être constatée.

13. Machine de construction selon la revendication 12,
**caractérisée en ce que**
un ou plusieurs dispositifs de détection (70), en particulier une unité de caméra, sont agencés pour la détection d'obstacles.

14. Machine de construction selon l'une des revendications 1 à 13,
**caractérisée en ce que**
la conduite d'énergie (50) est guidée le long du bras d'alimentation (40) avec une longueur variable.

15. Machine de construction selon l'une des revendications 1 à 14,
**caractérisée en ce que**
un tambour de conduite, une chaîne à câble et/ou un dispositif de tension de conduite pour la conduite d'énergie (50) est agencé au niveau de la superstructure (12).
